# EUROPÄISCHE PATENTSCHRIFT

(11) **EP 3 056 771 B1**
(45) Veröffentlichungstag und Bekanntmachung des Hinweises auf die Patenterteilung: **10.06.2020**
(21) Anmeldenummer: 16154847.4
(22) Anmeldetag: 09.02.2016
(51) Int. Cl.: F16H 61/02, F16H 59/18

(54) **VERFAHREN ZUM STEUERN EINES SELBSTTÄTIG SCHALTENDEN GETRIEBES UND KRAFTFAHRZEUG**
METHOD FOR CONTROLLING AN AUTOMATIC GEARBOX AND MOTOR VEHICLE
PROCEDE DE COMMANDE D'UNE TRANSMISSION AUTOMATIQUE ET VEHICULE AUTOMOBILE

(30) Priorität: 11.02.2015 DE 102015202400
(43) Veröffentlichungstag der Anmeldung: 17.08.2016
(73) Patentinhaber: Volkswagen Aktiengesellschaft, 38440 Wolfsburg (DE); AUDI AG, 85045 Ingolstadt (DE)
(72) Erfinder: Stegmann, Ulrich, 38228 Salzgitter OT Lichtenberg (DE); Prochazka, Walter, 85120 Hepberg (DE); Brüggmann, Daniel, 85057 Ingolstadt (DE)

(56) Entgegenhaltungen:
- DE-A1-102013 104 855
- US-A1- 2013 073 154

## Beschreibung

Die Erfindung betrifft ein Verfahren zum Steuern eines selbsttätig schaltenden Getriebes eines Kraftfahrzeugs und ein Kraftfahrzeug, das ein solches Verfahren ausführt.

Grundsätzlich ist es bekannt, in Kraftfahrzeugen Automatikgetriebe einzusetzen, die z.B. gemäß vorgegebener Kennlinien einen bestimmten Gang wählen. Diese Kennlinien sind typischerweise starr, das heißt ein Gangwechsel erfolgt immer bei bestimmten vorgegebenen physikalischen Parametern.

Solche starren Kennlinien sind oftmals so gewählt, dass sie zu einem relativ trägen Fahrverhalten führen und daher zum Beispiel für ein sportliches Fahren wenig geeignet sind. Daher ist es auch grundsätzlich bekannt, dass eine Steuerung für ein selbsttätiges Kraftfahrzeuggetriebe bspw. individuelle Wünsche eines Fahrers des Kraftfahrzeugs berücksichtigt.

Um ein sportlicheres Fahren zu ermöglichen, ist es bekannt, ein sogenanntes Ganghalten vorzusehen. Dabei wird der Gang bei Verringerung des Beschleunigungswunsches nicht hochgeschaltet, wodurch die Getriebeübersetzung höher gewählt und damit die Motordrehzahl erniedrigt wird, sondern gehalten, bis eine bestimmte Drehzahl des Motors des Kraftfahrzeugs erreicht ist.

Außerdem ist bspw. aus der deutschen Offenlegungsschrift DE 39 22 040 A1 bekannt, ein Hochschalten vor Kurven zu unterdrücken, indem erkannt wird, wenn der Fahrer schnell vom Fahrpedal geht. Die deutsche Offenlegungsschrift DE 41 20 603 A1 zeigt ein Verfahren bei dem beim Bremsen eine Rückschaltung erfolgt, wenn bestimmte Voraussetzungen erfüllt sind.

Aus der deutschen Offenlegungsschrift DE 10 2008 023 805 A1 ist ein Verfahren bekannt, bei dem ein Runterschalten des Ganges eines Getriebes eines Kraftfahrzeugs erfolgt, wenn ein Beschleunigungsvorgang erkannt wird. Der Beschleunigungsvorgang wird bspw. anhand eines eingelegten Ganges oder eines bestimmten Minimalgradienten eines Fahrpedalwerts erkannt.

Der Abstract zur japanischen Offenlegungsschrift JP 2010-007767 A1 zeigt ein Verfahren bei dem nach Erkennen eines schnellen Zurücknehmens eines Fahrpedals eines Kraftfahrzeugs ein Rückschalten erfolgt.

In der US 2013/073154 A wird eine automatische Kupplungssteuerung für das Einrücken und/oder den Eingriff einer Kupplung bzw. die Steuerung der Drehmomentübertragung einer Kupplung beschrieben. Unter bestimmten Bedingungen, insbesondere dann wenn das Fahrpedal mit einem bestimmten Geschwindigkeitswert, der einen bestimmten Geschwindigkeitswert übersteigt, nach unten gedrückt wird, wird eine Rückschaltung im Getriebe des Kraftfahrzeugs veranlasst.

Schließlich beschreibt die DE 10 2013 104 855 A1 ein Verfahren bzw. ein System zur aktiven Steuerung bzw. Regelung eines Fahrzeugs durch Lernen von Fahrtmustern. Hierbei wird die Fahrpedalstellung, insbesondere der Gradient der Fahrpedalstellung analysiert, um Fahrtmuster eines Fahrers zu lernen und auf der Basis der Lernergebnisse das Wechseln eines Schaltmusters bzw. Schaltschemas in einen Fahrtmodus, wie beispielsweise in einen ECO-Modus oder in einen Sport-Modus anzuzeigen. Aufgrund des hinterlegten Fahrtmusters und im Laufe der Zeit zusätzlicher ermittelter Fahrtinformationen wird über eine Fahrtmodus-Ermittlungseinheit ein vorbestimmter Fahrtmodus, wie beispielsweise ein ECO-Modus oder ein Normal-Modus oder ein Sport-Modus festgestellt und in ein dem jeweiligen Modus zugehöriges Schaltmuster gewechselt. Ein derartig ausgebildetes Schaltmuster ist dadurch geprägt, dass es gemäß einer vorgegebenen Kennlinie einen bestimmten Gang auswählt.

Zwar ermöglicht der oben genannte Stand der Technik teilweise ein sportlicheres Fahrverhalten eines Kraftfahrzeugs, allerdings sind die oben genannten Verfahren unflexibel und sind daher nur bedingt geeignet, individuellen Fahrerwünschen Rechnung zu tragen.

Aufgabe der vorliegenden Erfindung ist es, ein Verfahren und ein Kraftfahrzeug bereitzustellen, welche die oben genannten Nachteile wenigstens teilweise überwinden.

Diese Aufgabe wird durch das erfindungsgemäße Verfahren gemäß der Merkmale des Patentanspruches 1 und das Kraftfahrzeug gemäß der Merkmale des Patentanspruches 8 gelöst.

Ein erster Aspekt betrifft ein Verfahren zum Steuern eines selbsttätig schaltenden Getriebes eines Kraftfahrzeugs, umfassend:
Ermitteln einer Veränderung einer Beschleunigungsanforderung;
Ermitteln, zu welcher Kategorie aus einem Satz von Kategorien die Veränderung der Beschleunigungsanforderung gehört;
Halten eines aktuellen Ganges des Getriebes und/oder Rückschalten des Getriebes in Abhängigkeit der ermittelten Kategorie.

Ein weiterer Aspekt betrifft ein Kraftfahrzeug, umfassend:
ein selbsttätig schaltendes Getriebe,
eine Verbrennungskraftmaschine, die mit dem Getriebe gekoppelt ist,
ein Fahrpedal,
eine Bremse, und
eine Steuerung, die dazu eingerichtet ist, das Verfahren nach dem ersten Aspekt auszuführen.

Ein weiterer Aspekt betrifft eine Steuerung für ein Kraftfahrzeug nach einem zweiten Aspekt, die dazu eingerichtet ist, das Verfahren nach dem ersten Aspekt auszuführen.

Weitere vorteilhafte Aspekte ergeben sich aus den Ansprüchen und der folgenden Beschreibung bevorzugter Ausführungsbeispiele.

Wie oben erwähnt, betreffen manche Ausführungsbeispiele ein Verfahren zum Steuern eines selbsttätig schaltenden Getriebes eines Kraftfahrzeugs, wobei das Verfahren umfasst:
Ermitteln einer Veränderung einer Beschleunigungsanforderung;
Ermitteln, zu welcher Kategorie aus einem Satz von Kategorien die Veränderung der Beschleunigungsanforderung gehört;
Halten eines aktuellen Ganges des Getriebes und/oder Rückschalten des Getriebes in Abhängigkeit der ermittelten Kategorie.

In einer vorteilhaften Variante kann in Abhängigkeit der ermittelten Kategorie im Getriebe auch hochgeschaltet werden und/oder wenigstens eine zwischen dem Motor und dem Getriebe angeordnete Kupplung geöffnet werden.

Selbsttätig schaltende Getriebe sind seit langem bekannt und können bspw. fünf, sechs, sieben oder mehr Gänge aufweisen.

Das Ermitteln einer Veränderung einer Beschleunigungsanforderung kann in den Ausführungsbeispielen auf unterschiedliche Art erfolgen. Grundsätzlich ist die Benutzung jedes Parameters möglich, der indikativ für eine Beschleunigungsanforderung ist, wie zum Beispiel eine Veränderung einer Fahrpedalbewegung, eine Kraftstoffzufuhrveränderung, Drehzahlveränderung der Verbrennungskraftmaschine oder eines Antriebsrades, Betätigen einer Bremse usw.

In einem weiteren Schritt ermittelt das Verfahren, zu welcher Kategorie aus einem Satz von Kategorien die Veränderung der Beschleunigungsanforderung gehört. Die Anzahl der Kategorien kann grundsätzlich beliebig sein bzw. die Anzahl der Kategorien in einem Satz von Kategorien ist mindestens zwei.

Als weiteren Schritt umfasst das Verfahren das Rückschalten des Getriebes in Abhängigkeit der ermittelten Kategorie bzw. das Halten eines aktuellen Ganges des Getriebes.

Dadurch ist es möglich, je nachdem welche Beschleunigungsanforderung ermittelt wird, den Gang zu halten oder ein noch sportlicheres Fahren bzw. noch mehr Leistung abzurufen, in dem das Getriebe einen Gang zurückschaltet.

Bei manchen Ausführungsbeispielen umfasst der Satz von Kategorien (genau) vier Kategorien, da bspw. ein Fahrer eines Kraftfahrzeugs vier Kategorien von Beschleunigungsanforderungen gut unterscheiden kann. Dabei kann eine erste Kategorie eine sehr schnelle Veränderung der Beschleunigungsanforderung umfassen, eine zweite Kategorie eine schnelle Veränderung der Beschleunigungsanforderung, eine dritte Kategorie eine normale Veränderung der Beschleunigungsanforderung und eine vierte Kategorie eine langsame Veränderung der Beschleunigungsanforderung.

Die Aufteilung der Beschleunigungsanforderung in sehr schnell, schnell, normal und langsam erfolgt bei manchen Ausführungsbeispielen dadurch, dass bspw. ein Intervall zwischen einer minimalen Veränderung ("langsamste") und einer maximalen Veränderung ("schnellste") gleichmäßig in vier Intervalle aufgeteilt wird. Diese Aufteilung ist allerdings rein beispielhaft und der Fachmann wird begrüßen, dass die Aufteilung entsprechend vorliegender Randbedingungen beliebig geändert werden kann.

Zum Beispiel können die erste Kategorie "sehr schnelle Veränderung" und die vierte Kategorie "sehr langsame Veränderung" durch ein kleineres Intervall abgebildet werden als die beiden mittleren Kategorien, da es sein kann, dass es für einen Fahrer einfach ist, bspw. ein Fahrpedal des Kraftfahrzeugs kontrolliert "sehr schnell" bzw. sehr langsam zu bewegen, während die Änderungen der dritten Kategorie "schnell" und der vierten "normal" schwieriger für den Fahrer über das Fahrpedal auszuführen sind und daher durch ein größeres Intervall für den Fahrer leichter zu treffen ist.

Bei manchen Ausführungsbeispielen wird eine Umdrehungszahl einer Kraftmaschine des Kraftfahrzeugs bis zu der der aktuelle Gang gehalten wird, in Abhängigkeit der ermittelten Kategorie gesetzt. Dadurch kann im Vergleich zum Stand der Technik auch ein Rückschalten bei Drehzahlen erfolgen, bei denen normalerweise in den nächst höheren Gang geschaltet werden würde, so dass das sportliche Fahrverhalten mit hohen Drehzahlen möglich ist. Zum Beispiel kann die Drehzahl auf einen Wert von 5.500 Umdrehungen pro Minute erhöht werden, wobei die vorliegende Erfindung nicht auf diesen Wert beschränkt ist, sondern dieser nur beispielhaft erwähnt ist.

Bei manchen Ausführungsbeispielen umfasst das Ermitteln einer Veränderung der Beschleunigungsanforderung das Ermitteln eines Gradienten einer Fahrpedalbewegung eines Fahrpedals des Kraftfahrzeugs. Dementsprechend kann ein Fahrer des Kraftfahrzeugs durch entsprechendes Betätigen und damit Bewegen des Fahrpedals eine entsprechende Kategorie und damit das zugehörige Fahrverhalten wählen.

Bei manchen Ausführungsbeispielen umfasst das Ermitteln der Beschleunigungsanforderung das Ermitteln einer Bewegungsrichtung eines Fahrpedals des Kraftfahrzeugs.

Die Bewegung des Fahrpedals kann bspw. mit einem Bewegungssensor, einer Kamera, einem Drehpotentiometer oder dergleichen ermittelt werden und der Gradient der Fahrpedalbewegung kann aus einem entsprechenden Sensor-, Kamera-, Drehpotentiometersignal oder dergleichen ermittelt werden.

Bei manchen Ausführungsbeispielen umfasst das Ermitteln der Beschleunigungsanforderung das Ermitteln, ob eine Bremse des Kraftfahrzeugs betätigt ist. Dies kann zum Beispiel durch das Ermitteln eines Bremsdruckes erfolgen oder durch das Ermitteln, ob ein Bremslicht aktiviert ist.

Dadurch kann erkannt werden, ob ein Bremsvorgang vorliegt und bspw. ein Rückschalten des Ganges unterdrückt werden oder vorgenommen soll, um die Verzögerung des Kraftfahrzeugs zu unterstützen.

Manche Ausführungsbeispiele betreffen eine Steuerung, die dazu eingerichtet ist ein selbsttätig schaltendes Getriebe eines Kraftfahrzeugs zu steuern, wobei die Steuerung weiterhin dazu eingerichtet ist, das oben beschriebene Verfahren auszuführen.

Manche Ausführungsbeispiele betreffen ein Kraftfahrzeug, umfassend ein selbsttätig schaltendes Getriebe, eine Verbrennungskraftmaschine, die mit dem Getriebe gekoppelt ist, ein Fahrpedal, eine Bremse, und eine Steuerung, die dazu eingerichtet ist, das oben beschriebene Verfahren auszuführen.

Ausführungsbeispiele der Erfindung werden nun beispielhaft und unter Bezugnahme auf die beigefügte Zeichnung beschrieben, in der:
Fig. 1 schematisch ein Ausführungsbeispiel eines Kraftfahrzeugs schematisch veranschaulicht; und
Fig. 2 schematisch ein Ablaufdiagramm eines Ausführungsbeispiels eines Verfahrens zeigt.

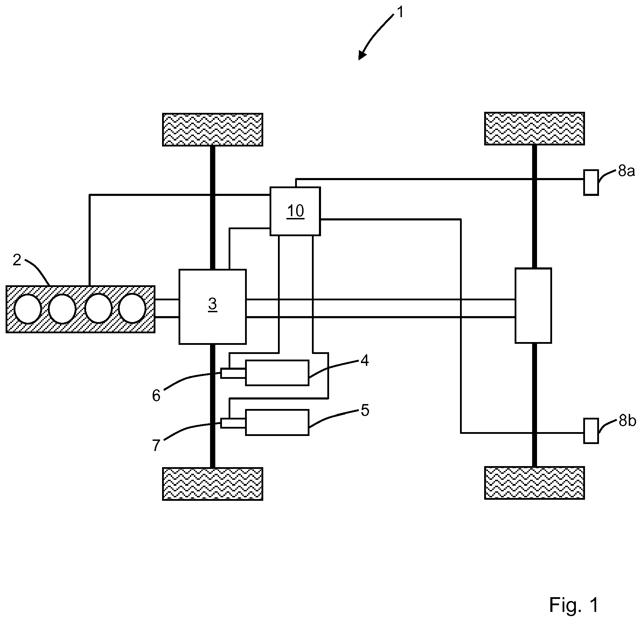

Ein Ausführungsbeispiel eines Kraftfahrzeugs 1 ist in Fig. 1 schematisch veranschaulicht.

Das Kraftfahrzeug 1 hat einen Motor 2, der hier beispielhaft als Vier-Zylinder-Ottomotor dargestellt ist. Der Motor 2 ist mit einem selbsttätig schaltenden Automatikgetriebe 3 gekoppelt, wie es grundsätzlich bekannt ist.

Außerdem hat das Kraftfahrzeug 1 ein Fahrpedal 4 und ein Bremspedal 5, die in bekannter Weise ausgestaltet sind. Betätigt ein Fahrer des Kraftfahrzeugs 1 das Fahrpedal 4, so beschleunigt das Kraftfahrzeug 1, indem dem Motor 2 mehr Kraftstoff zugeführt wird und betätigt der Fahrer das Bremspedal 5, so greift eine Bremseinrichtung, die das Kraftfahrzeug 1 abbremst. Bei Betätigung des Bremspedals 5 leuchten auch Bremslichter 8a und 8b auf, wie es grundsätzlich bekannt ist.

Um die Stellung des Fahrpedals 4 zu ermitteln, hat das Kraftfahrzeug 1 einen Fahrpedalsensor 6, der dazu ausgestaltet ist, die Fahrpedalstellung des Fahrpedals 4 zu erfassen.

Außerdem hat das Kraftfahrzeug 1 einen Bremsdrucksensor 7, der den Bremsdruck bei Betätigen des Bremspedals 5 ermittelt.

Eine Steuerung 10 des Kraftfahrzeugs 1 empfängt die Sensorsignale des Fahrpedalsensors 6 und des Bremsdrucksensors 7. Außerdem ist die Steuerung 10 mit den Bremslichtern 8a bzw. 8b gekoppelt und kann erkennen, wenn ein Bremslicht 8a, 8b aktiv ist. Dies geschieht z.B. über ein Auslesen eines entsprechenden Signals über einen CAN-Bus (nicht gezeigt) oder dergleichen, über den die Bremslichter 8a, 8b auch angesprochen werden, wie es im Kraftfahrzeugbereich üblich ist.

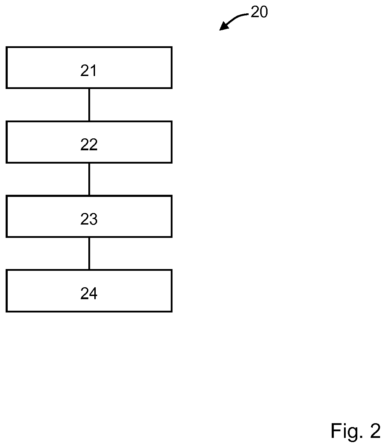

Die Steuerung 10 ist außerdem mit dem Automatikgetriebe 3 gekoppelt und führt das folgende Verfahren 20 aus, welches im Folgenden unter Bezugnahme auf die Fig. 2 und die Tabelle unten beschrieben wird.

Wie oben bereits ausgeführt, kann das Automatikgetriebe 3 selbsttätig einen Gang höher oder tiefer schalten. Die Schaltung erfolgt dabei typischerweise anhand vorgegebener Kennlinien, die sich bspw. nach der Motordrehzahl und/oder Fahrzeuggeschwindigkeit und/oder der Fahrpedalstellung richten. Zum Beispiel gibt es für jeden Gang eine Kennlinie, die für zugehörige Geschwindigkeits-Fahrpedalwerte festlegt, dass der entsprechende Gang gehalten wird. Wird eine bestimmte maximal Drehzahl des Motors 2 überschritten, so wird ein Gang hochgeschaltet und die für den entsprechenden Gang vorgegebene Kennlinie gibt nun wieder das Ganghalten vor. Auf ähnliche Art und Weise ist für jeden Gang eine Kennlinie für das Durchführen des sogenannten Ganghaltens vorgesehen und bspw. im Speicher der Steuerung 10 abgelegt.

Dieses bekannte Verfahren ist nun um das Verfahren 20 in Fig. 2 erweitert und die Steuerung 10 ist dazu eingerichtet, das hierin beschriebene Verfahren 20 auszuführen.

Typischerweise wurde im Stand der Technik bspw. aus Komfortgründen bei Ottomotoren eine Haltedrehzahl von ca. 4.000 U/min vorgeschlagen, bei deren Überschreitung hochgeschaltet wurde.

Um nun ein sportlicheres Fahrverhalten bei höheren Drehzahlen zu erreichen, könnte man bspw. daran denken, einfach nur die Haltedrehzahl bis zu der der Gang gehalten wird, anzuheben, z.B. auf 5.500 U/min. Nachteilig an einer solchen Vorgehensweise wäre, dass ein Gang zunächst über das Fahrpedal 4 geholt werden müsste, um eine solche hohe Drehzahl zu erreichen.

Daher ist das Verfahren 20 bzw. die Steuerung 10 so ausgestaltet, dass das Ganghalten auch ein Rückschalten eines Ganges durch das Automatikgetriebe vorsieht.

Dazu sieht das Verfahren 20 vor, dass die Steuerung 10 bei 21 eine Veränderung einer Beschleunigungsanforderung anhand der von dem Fahrpedalsensor 6 empfangenen Sensorsignale die Fahrpedalbewegung bzw. den Gradienten der Fahrpedalbewegung ermittelt, das heißt wie schnell der Fahrer des Kraftfahrzeugs 1 das Fahrpedal 4 insbesondere in Richtung der Nullgasstellung bewegt hat.

Bei dem Verfahren 20 ist nun ein Satz von vier Kategorien unterschiedlicher Gradienten der Fahrpedalbewegung vorgesehen, die bspw. in einem Speicher der Steuerung 10 abgelegt sind-

Bei 22 ermittelt das Verfahren 20 bzw. die Steuerung 10 anhand der Veränderung der Beschleunigungsanforderung, welche der vier Kategorien vorliegt und schaltet dann bei 23 entsprechend zurück, wenn ein Rückschalten vorgesehen ist, wie es im vorliegenden Ausführungsbeispiel bei der Kategorie "super schnell" der Fall ist.

Diese vier Kategorien sind "super schnell", "schnell", "normal" und "sehr langsam", wie auch in der folgenden Tabelle gezeigt ist:

| Gradient/Funktion | Segeln | Ganghalten | Ganghalten mit Rückschalten |
|---|---|---|---|
| Super Schnell | Nein | Ja | Ja |
| Schnell | Nein | Ja | Nein |
| Normal | Nein | Nein | Nein |
| Sehr langsam | Ja | Nein | Nein |

Bewegt der Fahrer das Fahrpedal 4 bewusst sehr langsam (kontrolliert) und in die Nullgasposition, so wird die Kategorie "sehr langsam" ermittelt und die Freilauffunktion "Segeln" des Automatikgetriebes 3 durch die Steuerung 10 aktiviert und es findet kein Rückschalten statt. Vorzugsweise wird bei der Aktivierung der Freilauffunktion die zwischen dem Motor 2 und dem Getriebe 3 angeordnete Kupplung, bzw. im Fall eines Doppelkupplungsgetriebes wenigstens die dem aktuellen Gang zugehörige Kupplung, geöffnet.

Wird das Fahrpedal 4 in einer normalen Geschwindigkeit bewegt, so wird die Kategorie "normal" bei 22 ermittelt und es wird weder ein Ganghalten noch ein Rückschalten durchgeführt, d. h. das Getriebe schaltet hoch, vorzugsweise um einen Gang.

Wird das Fahrpedal 4 schnell losgelassen, ermittelt das Verfahren 20 bzw. die Steuerung 10 die Kategorie "schnell" und aktiviert die Ganghalten-Funktion und die Steuerung 20 steuert das Automatikgetriebe 3 entsprechend. Die Ganghalten-Funktion ist dabei, wie oben ausgeführt und wie allgemein bekannt, über entsprechende Kennlinien implementiert.

Wird ein super schnelles Loslassen des Fahrpedals 4, auch als "Schnippen des Fahrpedals 4" bezeichnet, ermittelt (Kategorie "super schnell"), so sieht das Verfahren 20 ein Ganghalten mit Rückschalten vor und die Steuerung 10 steuert das Automatikgetriebe 3 entsprechend.

Das Rückschalten kann dabei bspw. durch eigene Kennlinien realisiert sein und/oder dadurch, dass die bereits für das Ganghalten vorgesehenen Kennlinien angepasst werden, indem sie bspw. durch einen Faktor oder eine Funktion angehoben werden. Dadurch wird ein Gang bei höheren Geschwindigkeiten und damit auch bei einer höheren Drehzahl gehalten, als dies ohne diese Anpassung der Fall wäre, sodass der rückgeschaltene Gang gehalten wird.

Bei der Funktion "Ganghalten mit Rückschalten" ist außerdem die Maximaldrehzahl angehoben, bis zu der ein Gang von dem Automatikgetriebe 3 gehalten wird, z.B. auf 5.300 U/min, um ein zu frühes Hochschalten zu unterdrücken und den niedrigeren Gang entsprechend bis zu der erhöhten Drehzahl von 5.400 U/min zu halten.

Zusätzlich kann auch noch eine Sprungtiefe festgelegt sein, die definiert, wieviel Gänge zurückgeschaltet werden kann und typischerweise ist die Sprungtiefe so ausgestaltet, dass nur ein Gang und nicht mehr zurückgeschaltet wird.

Außerdem kann das Verfahren bei manchen Ausführungsbeispielen noch weitere Schritte aufweisen bzw. weitere Daten miteinbeziehen, um eine entsprechende Kategorie zu ermitteln.

Zum Beispiel kann bei 24 ermittelt werden, ob die Bremseinrichtung des Kraftfahrzeugs 1 betätigt ist, wie oben beschrieben wurde. Die geschieht bspw. anhand des Bremsdrucksensorsignals und/oder durch Ermitteln, ob die Bremslichter 8a bzw. 8b aktiviert sind. Dies kann bspw. die Erkennung einer bestimmten Kategorie beschleunigen, da insbesondere bei der Kategorie "sehr schnell" zunächst ermittelt werden muss, ob der Fahrer nicht eine Notbremsung einleiten muss, bei der ein Rückschalten u.U. nicht erwünscht ist - oder umgekehrt - ob ein Rückschalten eingeleitet werden soll, welches die Notbremsung unterstützt.

Die vorliegende Erfindung ist nicht auf eine bestimmte Anzahl von Kategorien eingeschränkt und auch nicht auf eine bestimmte Anzahl von Sätzen mit Kategorien. Außerdem kann bspw. die Anzahl der Kategorien bzw. die Anzahl der Sätze von Kategorien von einem Programm, z.B. "Sport", "normal", etc. abhängen, das der Fahrer gewählt hat, um eine flexible, individuelle Einstellung des Fahrverhaltens bereitzustellen.

### Bezugszeichenliste

1 Kraftfahrzeug
2 Motor
3 Automatikgetriebe
4 Fahrpedal
5 Bremspedal
6 Fahrpedalsensor
7 Bremsdrucksensor
8a,b Bremslichter
10 Steuerung
20 Verfahren zum Steuern eines selbsttätig schaltenden Getriebes
21 Ermitteln einer Veränderung einer Beschleunigungsanforderung
22 Ermitteln, zu welcher Kategorie die Veränderung der Beschleunigungsanforderung gehört
23 Rückschalten des Getriebes in Abhängigkeit der ermittelten Kategorie

## Patentansprüche

1. Verfahren zum Steuern eines selbsttätig schaltenden Getriebes (3) eines Kraftfahrzeugs (1), umfassend: Ermitteln (21) einer Veränderung einer Beschleunigungsanforderung, wobei das Ermitteln der Beschleunigungsanforderung das Ermitteln eines Gradienten einer Fahrpedalbewegung und das Ermitteln einer Bewegungsrichtung eines Fahrpedals (4) des Kraftfahrzeugs (1) umfasst,Ermitteln (22), zu welcher Kategorie aus einem Satz von Kategorien die Veränderung der Beschleunigungsanforderung gehört, wobei der Satz von Kategorien mehrere Kategorien von unterschiedlichen Gradienten der Fahrpedalbewegung aufweist, Rückschalten (23) des Getriebes (3) in Abhängigkeit der ermittelten Kategorie.

2. Verfahren nach Anspruch 1, wobei der Satz von Kategorien vier unterschiedliche Kategorien enthält.

3. Verfahren nach Anspruch 2, wobei eine erste Kategorie eine sehr schnelle Veränderung der Beschleunigungsanforderung umfasst, eine zweite Kategorie eine schnelle Veränderung der Beschleunigungsanforderung umfasst, eine dritte Kategorie eine normale Veränderung der Beschleunigungsanforderung umfasst und eine vierte Kategorie eine langsame Veränderung der Beschleunigungsanforderung umfasst.

4. Verfahren nach einem der Ansprüche 1 bis 3, wobei eine Umdrehungszahl einer Kraftmaschine (2) des Kraftfahrzeugs (1) bis zu der der aktuelle Gang gehalten wird, in Abhängigkeit der ermittelten Kategorie gesetzt wird.

5. Verfahren nach einem der vorhergehenden Ansprüche, wobei das Ermitteln der Beschleunigungsanforderung das Ermitteln umfasst, ob eine Bremse (5) des Kraftfahrzeugs betätigt ist.

6. Verfahren nach Anspruch 5, wobei das Ermitteln, ob eine Bremse des Kraftfahrzeugs getätigt ist, das Ermitteln eines Bremsdruckes umfasst.

7. Verfahren nach Anspruch 5 oder 6, wobei das Ermitteln, ob eine Bremse des Kraftfahrzeugs getätigt ist, das Ermitteln umfasst, ob ein Bremslicht (8a, 8b) aktiviert ist.

8. Kraftfahrzeug (1), umfassend:ein selbsttätig schaltendes Getriebe (3), eine Verbrennungskraftmaschine (2), die mit dem Getriebe (3) gekoppelt ist, ein Fahrpedal (4), und eine Steuerung (10), mit deren Hilfe, das Verfahren nach einem Ansprüche 1 bis 7 ausgeführt wird.

## Claims

1. Method for controlling an automatic gearbox (3) of a motor vehicle (1), said method comprising the following:
determining (21) a variation of an acceleration request, wherein the determining of the acceleration request comprises the determining of a gradient of a driving pedal movement and the determining of a direction of movement of a driving pedal (4) of the motor vehicle (1);
determining (22) to which category of a set of categories the variation of the acceleration request is assigned, wherein the set of categories has a plurality of different gradients of the driving pedal movement;
down-shifting (23) the gearbox (3) as a function of the determined category.

2. Method according to Claim 1, wherein the set of categories contains four different categories.

3. Method according to Claim 2, wherein a first category comprises a very rapid variation of the acceleration request, a second category comprises a rapid variation of the acceleration request, a third category comprises a normal variation of the acceleration request, and a fourth category comprises a slow variation of the acceleration request.

4. Method according to one of Claims 1 to 3, wherein a rotating speed of a motor (2) of the motor vehicle (1) up to which the current gear is maintained is set as a function of the determined category.

5. Method according to one of the preceding claims, wherein the determining of the acceleration request comprises the determining of whether a brake (5) of the motor vehicle is actuated.

6. Method according to Claim 5, wherein the determining of whether a brake of the motor vehicle is actuated comprises the determining of a brake pressure.

7. Method according to Claim 5 or 6, wherein the determining of whether a brake of the motor vehicle is actuated comprises the determining of whether a brake light (8a, 8b) is activated.

8. Motor vehicle (1) comprising: an automatic gearbox (3); an internal combustion engine (2) which is coupled to the gearbox; a driving pedal (4); and a control unit (10) with the aid of which the method according to one of Claims 1 to 7 is carried out.

## Revendications

1. Procédé de commande d'une transmission automatique (3) d'un véhicule automobile (1), comprenant : la détermination (21) d'un changement d'une demande d'accélération, la détermination de la demande d'accélération comprenant la détermination d'un gradient d'un déplacement de pédale d'accélérateur et la détermination d'un sens de déplacement d'une pédale d'accélérateur (4) du véhicule automobile (1), la détermination (22) de la catégorie dans un ensemble de catégories à laquelle appartient le changement de la demande d'accélération, l'ensemble de catégories comportant plusieurs catégories avec différents gradients du déplacement de pédale d'accélérateur, la rétrogradation (23) de la transmission (3) en fonction de la catégorie déterminée.

2. Procédé selon la revendication 1, dans lequel l'ensemble de catégories contient quatre catégories différentes.

3. Procédé selon la revendication 2, dans lequel une première catégorie comprend un changement très rapide de la demande d'accélération, une deuxième catégorie comprend un changement rapide de la demande d'accélération, une troisième catégorie comprend un changement normal de la demande d'accélération, et une quatrième catégorie comprend un changement lent de la demande d'accélération.

4. Procédé selon l'une quelconque des revendications 1 à 3, dans lequel un nombre de tours d'un moteur (2) du véhicule automobile (1) jusqu'auquel le rapport actuel est maintenu est fixé en fonction de la catégorie déterminée.

5. Procédé selon l'une quelconque des revendications précédentes, dans lequel la détermination de la demande d'accélération comprend la détermination si le frein (5) du véhicule automobile est actionné.

6. Procédé selon la revendication 5, dans lequel la détermination si un frein du véhicule automobile est actionné comprend la détermination d'une pression de freinage.

7. Procédé selon la revendication 5 ou 6, dans lequel la détermination si un frein du véhicule automobile est actionné comprend la détermination si un feu de freinage (8a, 8b) est activé.

8. Véhicule automobile (1), comprenant : une transmission automatique (3), un moteur à combustion interne (2) couplé à la transmission (3), une pédale d'accélérateur (4) et une commande (10) permettant d'effectuer le procédé selon l'une quelconque des revendications 1 à 7.
